# EUROPEAN PATENT SPECIFICATION

(11) **EP 4 310 050 B1**
(45) Date of publication and mention of the grant of the patent: **23.04.2025**
(21) Application number: 22185416.9
(22) Date of filing: 18.07.2022
(51) Int. Cl.: B82Y 15/00, F04B 19/00, B01J 13/00, F04B 43/04

(54) **PLASMONIC MEDIATED PUMPING AND SENSING**
PLASMONISCH BEDINGTES PUMPEN UND MESSEN
POMPAGE ET DÉTECTION À MÉDIATION PLASMONIQUE

(43) Date of publication of application: 24.01.2024
(73) Proprietor: Universität Potsdam, 14469 Potsdam (DE)
(72) Inventor: Polley, Nabarun, 14476 Potsdam (DE); Werner, Peter, 14469 Potsdam (DE); Pacholski, Claudia, 14469 Potsdam (DE)
(74) Representative: Hertin und Partner Rechts- und Patentanwälte PartG mbB

(56) References cited:
- US-A1- 2013 065 777
- US-A1- 2018 214 838
- BAFFOU GUILLAUME ET AL: "Applications and challenges of thermoplasmonics", NATURE MATERIALS, NATURE PUBLISHING GROUP UK, LONDON, vol. 19, no. 9, 17 August 2020 (2020-08-17), pages 946 - 958, XP037224492, ISSN: 1476-1122, [retrieved on 20200817], DOI: 10.1038/S41563-020-0740-6
- LEONID IONOV: "Actively-moving materials based on stimuli-responsive polymers", JOURNAL OF MATERIALS CHEMISTRY, vol. 20, no. 17, 11 February 2010 (2010-02-11), pages 3382, XP055154471, ISSN: 0959-9428, DOI: 10.1039/b922718k

## Description

In a first aspect, the invention relates to a pumping system for transporting an analyte in a medium. The pumping systems comprises a substrate, wherein the substrate is positioned in a medium and a thermoresponsive polymer is disposed on the substrate. Furthermore, a film is disposed on the thermoresponsive polymer. The pumping system also comprises a heat source so that heat can be generated in the film. Through this, the medium and the thermoresponsive polymer also experience a thermal effect. Through the heat source, the thermoresponsive polymer can experience temperatures above and below the volume phase transition temperature, so that a controlled volume reduction and volume increase of the thermoresponsive polymer is possible. By reducing the volume of the thermoresponsive polymer, a pressure reduction can be achieved, and by increasing the volume, a pressure increase can be achieved in the medium and a pumping effect can be achieved through the pressure variation.

Furthermore, the invention relates to a sensor and a method for transporting and/or detecting an analyte in a medium.

### Background and state of the art

Surface plasmon resonance (SPR) deals with collective oscillations of conduction electrons in metallic nanostructures. Here, the intensity and position of the SPR strongly depend on the size, shape and composition of the nanostructures as well as on the dielectric properties of the environment.

This variety of reaction variables makes it possible to use the principle of SPR with an associated cause of resonance in many fields of application. For example, optical sensors with plasmonic metallic nanostructures can be developed. Therefore, plasmon enhanced optical sensors are increasingly used in the detection of analytes and/or biomolecules, in biomedical diagnostics, homeland security, food safety and environmental monitoring.

SPR occurs in two different form, namely localised SPR (LSPR) and propagating surface plasmon polaritons (SPPs). LSPR occurs when the dimensions of a metallic nanostructure are smaller than the wavelength of incident light, resulting in collective but non-propagating oscillations of surface electrons in the metallic nanostructure. LSPR depends strongly on the refractive index of the surrounding medium and forms the basis for colorimetric plasmonic sensors. LSPR also concentrates the incident electromagnetic (EM) field around the nanostructure. The local EM field can influence optical processes such as fluorescence, Raman scattering and infrared absorption, resulting in plasmon enhanced fluorescence (PEF), surface enhanced Raman scattering (SERS) and surface enhanced infrared absorption spectroscopy (SEIAS). The EM field associated with LSPR extends into the surrounding medium (generally about 30 nm) and decays approximately exponentially for a dipole.

In contrast to LSPR, SPPs are the propagating charge oscillations on the surface of thin metal films. SPPs cannot be excited by radiation from free space, but require momentum matching, e.g., periodicity in a nanostructure, to achieve resonance excitation. SPPs are modulated by the refractive index of the surrounding medium and transform the sensor signal. SPP can also play a role in modulating the radiation in PEF and SERS. The evanescent EM field of SPP decays with a longer length (usually about 200 nm) than LSPR, so SPP can be modulated by changes at a greater distance from the nanostructure surface.

By using LSPR and/or SPP, numerous plasmonic metallic nanostructures have already been developed as signal amplifiers and transducers for sensitive optical sensors. Particularly, plasmonic nano structures, due to its ability to confine and enhance electromagnetic fields on subwavelength scale has emerged as a transduction element, where for example change in the refractive index due to the capture of molecules on the plasmonic surface is monitored. In the state of the art, some approaches are known for the construction and function of plasmonic sensors.

In Garcia-Guirado et al. (2018), the electrothermoplasmonic effect is used to overcome a limit by optoelectric fluid convective flow generation. For this purpose, an electrothermoplasmonic microfluidic chip is provided, which is in a beam path that allows spectral properties to be determined, for example, to enable detection of biomolecules. The electrothermoplasmonic microfluidic chip comprises a first and a second electrode between which a microfluidic layer and a plasmonic structure are arranged. Two further microfluidic layers are attached to the first electrode. The plasmonic structure comprises an LSPR sensor, which consists of a two-dimensional array of gold nanorods.

In Eftekhari et al. (2009), a chip array is proposed that has a gold-on-silicon nitride membrane with through nanoholes. The chip array is inserted between a fibre optic and a microscope objective. The microscope objective provides light for fluorescence measurement and spectroscopy. Furthermore, the chip array has junctions that are in fluid communication with an environment. With the nanoholes arranged in an array, it is possible to combine the advantages of nanofluidics and nanoplamonics, because the proposed arrangement results in improved transport to an active surface and by arranging the holes in parallel, the flow resistance can be optimised.

In Giaquinto et al. (2019), a technology is proposed with which it is possible to perform cavity amplification so that a boost in the performance of lab-on-fibre systems is achieved. For this purpose, a gold layer with openings (like a grating) as well as a microgel and an upper gold layer are applied to an optical fibre tip. The microgel is sandwiched between the lower and upper gold layers so that an optical cavity is provided by this arrangement. The gold nanostructure on the fibre tip acts as an effective local heater, so that by controlling the temperature it is possible to reduce the dimensions of the microgel and thus optimise the dimensions of the cavity. In particular, stimuli-induced swelling/collapse of the microgel is modulated by the intensity and phase of the returned light coupled in the optical fibre.

In Sharma et al. (2016), the actuation of tunable nanohole arrays by a thermoresponsive hydrogel cushion is described. A gold film with a nanohole array is present on the hydrogel. When the hydrogel collapses with an increase in temperature, water is displaced through the pores, which then become impermeable or closed. In the swollen state, the low polymer volume fraction in the hydrogel creates a symmetrical refractive index. When the hydrogel collapses, the refractive index symmetry is disturbed and different SPPs (surface plasmon polariton) are formed at the individual interfaces. The reversible swelling and collapsing of the hydrogel is accompanied by a strong refractive index change of 0.1, which can be used to tune the wavelength at which plasmonically enhanced transmission occurs.

In Bafou et al. (2020) a system suitable for pumping or transporting an analyte is disclosed, wherein the analyte is present in a medium, the pumping system comprises a substrate, the substrate is located within the medium, and the pumping system further comprising a heat source.

Although many approaches are already known in the prior art to provide plasmonic sensors, there is still a need to improve the known prior art. For example, the prior art often requires an external pumping mechanism to deliver an analyte to an active detection area. Even with a pumping mechanism in place, the plasmonic sensors have a diffusion limit due to the formation of depletion zones. As a result, molecules to be detected take longer to enter the detection zone, making the entire analysis time-consuming. Furthermore, most plasmonic sensors are based on a flow over mode. However, this has a detrimental effect on sensitivity, especially in cases where a nanohole array is used for a plasmonic sensing element. Thus, there is a need for improvement for plasmonic sensors of the state of the art.

### Objective of the invention

The objective of the invention was to eliminate the disadvantages of the prior art. In particular, an improvement of the current state of the art should be achieved. Further, an aim was to provide a sensor and/or a system with which it is possible to detect an analyte precisely, reliably and in an optimised manner and at the same time to make the detection possibilities more effective.

Furthermore, it should be possible to optimise the transport of an analyte in a desired direction as well as the direction itself.

### Summary of the invention

The objective according to the invention is solved by the features of the independent claims. Advantageous embodiments of the invention are described in the dependent claims.

In a preferred embodiment, the invention relates to pumping system for transporting an analyte, the analyte being present in a medium, the pumping system comprising a substrate,
characterized in that
a) the substrate is located within the medium,
b) a thermoresponsive polymer is disposed on the substrate,
c) a film is present on the thermoresponsive polymer,
d) the pump system comprises a heat source,
wherein, starting from the heat source, heat is generated in the film, so that a sequence of temperatures above and below a volume phase transition temperature (VPTT) is obtainable by the thermoresponsive polymer and a pressure variation is obtainable by the medium, so that the analyte is transportable in a direction by the pressure variation.

The combination of the present invention features leads to a surprising synergistic effect, which results in the advantageous properties and the associated overall success of the invention, whereby the individual features interact with each other. In this respect, the preferred pumping system has been shown to be extremely advantageous in a number of aspects.

Advantageously, it is particularly easy to set a direction in which the analyte is to be transported and thus pumped. In doing so, the flow of the analyte can be influenced in a desired manner by means of corresponding settings, which will be discussed later in the description, and in particular by means of further preferred embodiments. By influencing the flow, the adjustment of the pump direction, the speed and/or the pressure is preferably meant. Thus, flow parameters can be regulated surprisingly well and easily. The latter effect has proven to be particularly useful in many fields of application, for example for a plasmonic sensor.

Especially with regard to plasmonic sensors, it was common in the prior art to use external pumping systems that transferred one or more analytes into an active sensing region to enable detection and/or measurement. Even when a pumping mechanism is present in current plasmonic sensors, they are diffusion limited as there is often a depletion region around the sensor. This means that the molecules and/or atoms of the analyte to be detected take longer to reach the active sensor area, thus increasing the analysis time. Most plasmonic-based sensors operate in 'flow-over' mode. However, the literature reports that flow-through sensing is more sensitive. This concept also applies to strategies using nano-hole array (NHA) structures as the plasmonic sensing element.

Advantageously, the preferred pumping system makes it possible to dispense with an external pumping mechanism for plasmonic sensors. This advantageously leads to a faster and thus better transfer of the analyte into the detection range of a plasmonic sensor. The pumping motion by the preferred pumping system, in particular in addition to convection that can be generated by a photothermal effect, leads to an active mass transport, whereby the molecules reach the detection range more efficiently (in particular faster). In this way, the costs are considerably reduced in order to carry out a measurement and/or detection of the analyte.

Furthermore, it is of great advantage that the preferred pumping system has particularly compact dimensions, so that advantageous progress is achieved with regard to miniaturisation. Thus, it is advantageously possible to integrate the preferred pumping system in many areas and further components. Thus, advantageously, a substantial progress is achieved in the field of point-of-care applications. For example, the preferred pumping system can be used in form of a handheld device. It is also advantageously possible to attach it to, on or in an optical fibre, for example on a tip of an optical fibre. Advantageously, the preferred pumping system is field deployable, i.e., it can be used in the context of devices required for "on-site" use, e.g. the aforementioned handheld devices. In particular, this is desirable in the field of medical technology, where the patient expects a result quickly and directly in order to check whether, for example, a certain disease is present or not. The preferred pumping system thus achieves a considerable advance, since in all such devices it is desirable to transfer the analyte to be detected more quickly into a detection range, which is made possible by means of the preferred pumping system.

An extremely great advantage of the preferred pumping system is also that a significant improvement is made possible regarding the sensitivity of the analyte. In particular, significantly fewer molecules of the analyte are required to generate a detectable signal to infer the presence and/or concentration of the analyte. This has proven to be particularly advantageous in the context of plasmonic sensors. Thus, a sensitivity is achieved that is, for example, higher by a factor of about 4, 5, 6, 7, 8, 9, 10 or more than those sensitivities of the prior art.

Furthermore, high sample volumes are advantageously not required to carry out a detection and/or concentration determination of the analyte. Thus, it is advantageously sufficient if the sample volume has a volume of a few nanolitres. Advantageously, the preferred pumping is not limited to specific sizes of a sample volume, as it can also be used with larger sample volumes. However, it is a particularly great advantage, especially in the light of higher sensitivity and/or miniaturisation, that a useful measurement is possible with a small sample volume.

It is a further advantage that the desired pumping system is not limited to a particular selection or type of analyte. Furthermore, it is advantageously possible to pump one or more analytes in a desired direction. Thus, advantageously, no condition is imposed with respect to both the selection, the structure, the composition and/or the choice of the analyte in order to pump them in a pumping direction.

Also, it is of great advantage that the preferred pumping system is not limited to a certain selection of substrate materials. This also advantageously provides flexibility about the selection of the material of the substrate, so that the preferred pumping system can be implemented in a particularly targeted manner in the respective field of application.

In general, the preferred pumping system advantageously comprises preferred components that can be provided at low cost. Thus, the preferred pumping system itself can also be manufactured at low cost. In particular, the preferred pumping system is suitable for mass production. Thus, the preferred pumping system can advantageously be manufactured in a particularly process-efficient manner, so that economic efficiency is also enabled by the preferred pumping system.

The preferred pumping system preferably uses, without being limited to theory, the principle of thermoplasmonics and/or a photothermal effect.

The term thermoplasmonics means preferably the generation of thermal energy due to plasmonics in nanomaterials, i. e. materials with nanometre sizes. Particularly, plasmonics are caused by electromagnetic radiation, in the context of the invention by the heat source. Plasmonics particularly utilize surface plasmon polaritons (SPPs), which are coherent electron oscillations which travel along the interface between the thermoresponsive polymer and the film and are driven by electromagnetic waves.

The average skilled person is able to establish the effective connection of the preferred components so that thermal energy is produced due to plasmonics. By the term "effective connection" is preferably meant such an arrangement of the preferred components that the effect of one component can be transferred to one or more further components.

In the context of the invention, the heat can preferably be produced by a thermoplasmonic effect which is used analogously described by the term thermoplasmonics in the context of the invention.

In further preferred embodiments, a photothermal effect may be used to move the analyte in a direction. The photothermal effect preferably describes the process of electromagnetic radiation being absorbed and converted into heat. Hence, the photothermal effect preferably means the generation of heat by electromagnetic radiation. Thus, a thermoplasmonic effect (or thermoplasmonics) is a special case of the photothermal effect.

Hence, in a preferred embodiment, the invention relates to pumping system for transporting an analyte, the analyte being present in a medium, the pumping system comprising a substrate,
characterized in that
a) the substrate is located within the medium,
b) a thermoresponsive polymer is disposed on the substrate,
c) a film is present on the thermoresponsive polymer,
d) the pump system comprises a heat source,
wherein, starting from the heat source, heat is transferrable to the film for an use of a photothermal effect, preferably a thermoplasmonic effect, so that a sequence of temperatures above and below a volume phase transition temperature is obtainable by the thermoresponsive polymer and a pressure variation is obtainable by the medium, so that the analyte is transportable in a direction by the pressure variation.

Preferably, heat is transferred to the film by the heat source through the substrate and the thermoresponsive polymer. The term "starting from" preferably means that the heat source forms a starting point to generate heat, which in turn is transferable to the film. The heat source in the context of the invention preferably means a component that can cause heat. Preferably, a laser is used as the heat source, with which focused electromagnetic radiation can be transferred to the film. In the context of the invention, the heat source can be understood as a stimulation source, so that terms such as heat source and stimulation source can be used analogously.

By transferring heat from the heat source, heat can preferably be generated in the film. Since the film is preferably surrounded by the medium, the heating of the film also leads to heat formation of the surrounding medium. Furthermore, there is preferably also a heat transfer from the film to the thermoresponsive polymer, since the film is preferably arranged on the thermoresponsive polymer. The thermoresponsive polymer may itself be a layer or a layer system, where a layer system means a plurality of layers. In further preferred embodiments the thermoresponsive polymer can be multiple particles.

Thermoresponsive polymer refers specifically to a polymer that changes its physical properties drastically and discontinuously with temperature. Thermoresponsive polymers belong to the class of stimuliresponsive materials, in contrast to sensitive materials, which only continuously adapt their properties to external conditions. In the context of the invention, particular use is made of the property of corresponding thermoresponsive polymers that a volume change occurs. This is due, among other things, to the fact that thermoresponsive polymers exhibit a discontinuous progression of the degree of swelling with temperature. At the volume phase transition temperature (abbreviated as VPTT), a strong change in the degree of swelling occurs. In particular, an abrupt, discontinuous change of the degree of swelling occurs at the volume phase transition temperature. This in turn also leads to a change in the volume of the thermoresponsive polymer. The average person knows that the VPTT does not always indicate a specific temperature. The VPTT can also be a temperature range, i.e., a span between two temperature values. Thus, the VPTT specifically denotes a temperature or temperature range at which there is an abrupt change in volume.

Preferably, since the film is disposed on the thermoresponsive polymer, heat is also transferred to the thermoresponsive polymer. Preferably, temperatures of the thermoresponsive polymer that are above and below the VPTT are achievable through the heat source. In particular, it is possible to achieve a sequence of temperatures of the thermoresponsive polymer above and below the VPTT. A sequence of temperatures above and below the VPTT preferably means that temperatures above and below the VPTT are achievable one after the other. A sequence of temperatures above and below the VPTT also includes a repeating sequence of temperatures above and below the VPTT.

Preferably, the temperatures above and below the VPTT are achievable by adjusting the heat source accordingly. Preferably, if the heat source is a laser, the temperatures above and below the VPTT can be done, for example, by varying the intensity of the radiation or by switching it on and off.

If preferably the temperature of the thermoresponsive polymer is higher than the VPTT, there is a volume reduction of the thermoresponsive polymer. Here, the volume reduction preferably means that the volume decreases compared to an initial volume of the thermoresponsive polymer when the thermoresponsive polymer has a temperature that is higher than the VPTT. Preferably, the thermoresponsive polymer collapses at a temperature above the VPTT. The preferred reduction in volume of the thermoresponsive material at a temperature above the VPTT also results in a reduction in pressure within the medium, so that the analyte in the medium can be transported towards the film.

If the heat source is adjusted accordingly so that no further heat is applied, the thermoresponsive polymer cools and so does the medium (e.g., by switching off or reducing the intensity of the radiation if the heat source is a laser). If the temperature of the thermoresponsive polymer preferably reaches a temperature below the VPTT, the volume of the thermoresponsive polymer increases. The increase in volume preferably leads to an increase in pressure of the medium.

Thus, a reduction in volume of the thermoresponsive polymer and a reduction in pressure of the medium can advantageously be achieved by a temperature of the thermoresponsive polymer above the VPTT. Furthermore, a volume increase (in particular after the volume reduction) of the thermoresponsive polymer and a pressure increase of the medium can advantageously be achieved by a temperature of the thermoresponsive polymer below the VPTT. Advantageously, in particular by the pressure increase and/or by the sequence of pressure increase and pressure reduction, in particular by a repetitive sequence of pressure increase and pressure reduction of the medium, the analyte can be transported in a direction. The direction of the transported analyte can be stated as the pumping direction in the context of the invention. Hence, the pumping direction is the desired direction of the analyte to be transported. The "direction" preferably means the pumping direction, i.e. the direction in which the analyte is to be conveyed or pumped.

In the context of the invention, the term "pressure variation" includes both a pressure increase and a pressure decrease. In particular, the pressure variation also comprises a sequence, in particular also a repetitive sequence, of a pressure increase and pressure decrease of the medium. The pressure variation allows the analyte present in the medium to be conveyed in a direction and thus pumped.

It is understood that the action of the preferred components, in particular the achievement of a pumping action in a direction that can be adjusted, is achieved by combining the components of the preferred pumping system.

The pumping system refers to a system that enables an analyte to be pumped in a desired direction. The preferred pumping system preferably comprises a substrate, a thermoresponsive polymer and a heat source.

The substrate preferably refers to the component to which other components are attached, such as the thermoresponsive polymer and the film. The substrate thus preferably acts as a support. The substrate may, for example, denote a (circular) round or square disc having a thickness in the millimetre or submillimetre range. The substrate is preferably placed within the medium, the medium containing the analyte to be pumped.

The analyte refers to the substance in the medium that is to be conveyed in a direction. The conveyance in a desired direction may, for example, be for the purpose of enabling further analysis of the analyte, e.g., in the context of a detection and/or concentration determination.

The medium preferably refers to a carrier for the analyte. Here, the phrase "carrier for the analyte" means that the analyte is present in the medium in such a way that a mixture comprising analyte and medium is present. The mixture comprising medium and analyte may be a solution or a dispersion.

Preferably, the thermoresponsive polymer is present on the substrate. The inventors have recognised that, in particular, by using temperatures above and below the VPTT, a pumping direction of the analyte is established. For the thermoresponsive polymer to achieve temperatures above and below the VPTT, there is preferably a film on the thermoresponsive polymer.

The preferred heat source allows heat to be transferred to the film so that the heat from the film can be transferred to the thermoresponsive material and/or the medium. The film preferably refers to a material located on the thermoresponsive polymer. In particular, the film is a particularly thin material.

In a further preferred embodiment, the pumping system is characterized in that the thermoresponsive polymer material is disposed between the film and the substrate, preferably the thermoresponsive polymer material comprises one or more layers and/or the thermoresponsive polymer is present as a plurality of particles.

The preferred placement of the thermoresponsive polymer between the film and the substrate has proven to be particularly advantageous in order to transport the analyte in a desired direction and thus to select the pumping direction of the analyte. Also, placing the thermoresponsive polymer between the film and the substrate has proven to be particularly advantageous in that heat transfer from the film to the thermoresponsive polymer can occur reliably.

The above-mentioned preferred embodiments of the thermoresponsive polymer have also been shown to be particularly advantageous. The individual options advantageously have their own surprisingly advantageous technical effects.

In a preferred embodiment, the thermoresponsive polymer is present between the film and the substrate as a layer. If the thermoresponsive polymer is preferably present as a single layer, it can also be referred to as a monolayer in the context of the invention. The embodiment of the thermoresponsive polymer as a single layer has proven to be advantageous in two aspects. On the one hand, the embodiment as a single layer leads to the fact that a parallel and/or uniform movement of the film is made possible in case a volume change of the thermoresponsive polymer occurs. This results from the fact that the film is arranged on the thermoresponsive polymer. Advantageously, this also enables a parallel and/or uniform movement of the film and/or the analyte. By a parallel movement of the film or the analyte is preferably meant that most sections, preferably all sections, of the film undergo a change in the same direction if there is a volume change of the thermoresponsive polymer. A parallel movement of the analyte preferably means that the movement of substantially all or the majority of the particles of the analyte is substantially in the same direction and/or substantially equidistant from each other. Preferably, an uniform movement of the film means that the change in position of the film during a volume change (comprising volume increase and volume decrease of the thermoresponsive polymer) is substantially uniform along the majority or all regions of the film. In particular, an uniform movement of the analyte means that uniform flow parameters can be achieved, for example in terms of flow velocity, such that substantially all of the particles or a plurality of the particles of the analyte have substantially the same or similar flow parameters during a pumping cycle (meaning in particular a sequence of pressure variations to induce a pumping action).

On the other hand, the preferred embodiment of the thermoresponsive polymer as a film, i.e., a monolayer, is advantageous in that it is particularly easy to produce. Thus, to provide the film as a monolayer, proven coating technologies of the prior art can be used, which have proven to be efficient in production. Preferably, the coating is provided by a coating process within a coating apparatus, preferably including but not limited to by spray coating, spin coating, dip coating, mist coating and/or steam coating.

In further preferred embodiments, the thermoresponsive polymer is present as more (particularly multiple) layers. In embodiments in which the thermoresponsive polymer is in the form of more layers, it may also be referred to as a multilayer. Advantageously, the application of multiple layers results in an increased pump volume being achievable with each pump cycle. Thus, a higher volume of analyte can be pumped in one direction within a shorter time, which has proven to be particularly advantageous for applications such as a plasmonic sensor. By the increased pump volume is preferably meant the flow volume, in particular the flow volume of the analyte. By a pumping cycle is preferably meant a sequence comprising a temperature increase above and below the VPTT to achieve the pumping effect, i.e., reaching a direction in which the analyte is transportable.

In further preferred embodiments, the thermoresponsive polymer is present as a plurality of particles. Advantageously, in one embodiment of the thermoresponsive polymer, the generated pumping volume can be achieved repetitively in an embodiment of a plurality of particles.

Consequently, the uniformity of the pumping action is advantageously favoured. In particular, the pumping volume can advantageously be controlled particularly precisely, so that fluctuations in the pumping volume during a pumping cycle can advantageously be substantially avoided. A further advantage in the embodiment of the thermoresponsive polymer as a plurality of particles is that a uniform and/or parallel movement of the film and thus also of the analyte is made possible, too. In addition, it is advantageous that the plurality of particles of the thermoresponsive polymer is particularly easy to provide, so that advantageously a considerable process efficiency can be achieved during the production of the preferred pumping system.

In a further preferred embodiment, the pumping system is characterized in that the thermoresponsive polymer is present as particles on the substrate, wherein preferably the particles having different output sizes, more preferably the different output sizes of the particles being present as a gradient with respect to the output sizes.

The preferred application of the thermoresponsive polymer in the form of particles with different initial sizes has proven to be advantageous in that the direction in which the analyte can be transported can be adjusted particularly easily by reducing and increasing the volume of the particles at temperatures above and below the VPTT. Particularly preferably, the particles are present as a gradient with respect to their initial size.

The term "gradient with respect to the initial size" means in the context of the present invention preferably means that the particles are composed of different initial sizes along their course. For example, the particles may have a larger initial size at a first portion than at a second portion of the substrate. In particular, the gradient also includes the option that the output size of the particles changes continuously along their course or with respect to their position on the substrate. In particular, a gradient is provided by the gradient with respect to the initial sizes of the particles of the thermoresponsive polymer, so that the analyte can be conveyed in the direction of the gradient. Thus, the particles may always have a reduced initial size, particularly in terms of volume and/or diameter. For example, it may be preferred that each neighbouring particle has a reduced initial size. Accordingly, since the film is preferably arranged on the particles, there is also a gradient with respect to the arrangement of the film on the particles.

If the particles are preferably present as a gradient with respect to their initial sizes, it is further preferred that starting from the heat source heat can be transferred to the film, whereby the heat of the film can be transferred to the particles. If the particles reach a temperature that is above the VPTT, their initial size is reduced, whereby preferably all particles reduce their initial size. Since the particles preferably have different initial sizes, different pressure reductions also occur. In particular, the different pressure reductions can also be achieved as a gradient. When the particles reach a temperature above the VPTT, the size of the particles increases again, with all particles preferably increasing in size. This also leads to an increase in pressure in the medium. In particular, a desired pumping direction can be achieved by an alternating sequence of repeated pressure increases and pressure decreases in the medium. Thus, the direction of the particles in which the analyte can be transported can be optimised in a particularly reliable and efficient manner.

In a further preferred embodiment, the pumping system is characterized in that the thermoresponsive polymer is present as particles on the substrate, wherein the particles are arranged having a gradient with respect to their volume phase temperature (VPTT).

An arrangement of particles with gradient with respect to their VPTT preferably means that the particles are positioned such that their VPTT are present as a gradient. To achieve this, it may be preferable to chemically modify the particles so that they have a different VPTT to each other. It may also be preferred that the particles have different materials and/or material compositions so that a gradient with respect to the VPTT is achievable. For example, there may be 2 or 3 or more particles with different VPTT, the number of particles being chosen by the skilled person.

If there is a gradient with respect to the VPTT along the arrangement of the particles as a thermoresponsive polymer, the increase in volume and decrease in volume of the particles can result in a directed flow of the analyte through the heat transfer of the heat source. Without being limited to theory, this is due to the fact that with different VPTT of the particles, these also experience a different volume increase and volume decrease, so that a directed flow can arise. In particular, when heat is generated by the heat source in the film, due to the thermoplasmonic/photothermal effect, the particles with low VPTT will collapse first and then the particles with high VPTT.

In further preferred embodiments, one or more layers may have a gradient with respect to VPTT. The explanations given for volume increase and volume decrease also apply to one or more layers if the thermoresponsive polymer is present in such a way. Thus, it is also possible to optimise the desired direction of the pumping system by different VPTT along one or more layers having a different VPTT at sections, the different VPTT being present as a gradient. Therefore, it can be said that in preferred embodiments the thermoresponsive polymer has a gradient with respect to the VPTT.

In a further preferred embodiment, the pumping system is characterized in that starting from the heat source different amounts of heat are transferrable to the film in different regions, wherein preferably that the different amounts of heat are transferable to the film as a temperature gradient.

The preferred transfer of heat from the heat source has also been shown to be particularly advantageous in achieving a desired direction in which the analyte can be transported. For example, if the thermoresponsive polymer is provided as particles, the particles can have essentially the same initial size. The desired pumping direction can preferably be achieved by transferring different heat to the film so that a different temperature is present at different portions of the film. This different amount of heat on the film can accordingly be transferred to the thermoresponsive polymer, so that the thermoresponsive polymer also has different temperatures at different areas. Consequently, the different temperatures of the thermoresponsive polymer at different sections can also result in a different volume reduction and volume increase at a temperature above and below the VPTT. As a result, different pressure reductions and pressure increases are also achieved at different sections, so that the pumping direction can be optimally controlled.

Preferably, the heat is transferred to the film in such a way that a temperature gradient is created on the film. The temperature gradient on the film preferably denotes a change in temperature depending on the position on the film, so that in particular the temperature is present as a gradient in the sense of a temperature change. In particular, the temperature gradient can be a continuous temperature gradient, i.e., a continuous change in temperature as the film progresses.

Thus, heat can be transferred to the thermoresponsive polymer by a temperature gradient of the film, so that the volume reduction and volume increase at a temperature above and below the VPTT also takes place in the form of a gradient. Advantageously, the pumping direction can be influenced in a particularly efficient way.

In a further preferred embodiment, the pumping system is characterized in that the film has a pore structure comprising pores, wherein preferably capture probes are present on the substrate and/or the film, so that the analyte is flowable through the pores by the pressure variation and capture probe-analyte-complexes are formable.

A pore structure preferably means that a structure is present which comprises pores. The pore structure can preferably be described by the porosity and represents the ratio of void volume to total volume. A pore preferably means an opening, in particular a cavity. The pores may be selected from a group comprising micropores (diameter of the pores smaller than 2 nm (nanometres)), mesopores (diameter of the pores between 2 nm - 50 nm) and/or macropores (diameter of the pores larger than 50 nm). Preferably, the diameter of the pores is between 50 nm - 800 nm, and particularly preferably the diameter of the pores is about 150 nm. Advantageously, the diameter of the pores can be easily adjusted, for example while providing the film onto the thermoresponsive polymer.

The presence of a pore structure and thus the presence of pores on the film has proven to be extremely advantageous in that the analyte can flow through the pores due to the pressure variation. Preferably, a capture probe is present on the substrate, so that the pressure variations allow the analyte to pass through the pores in the direction of the substrate, to form a compound with the capture probe and thus to form capture probe-anyalyte complexes. This embodiment has been found to be particularly advantageous for studying analytes in solutions where the solvent would be the medium. For example, the scattering effect of electromagnetic radiation can be used to study the analyte. If there is a connection between the capture probe and the analyte, so that there are capture probe-analyte complexes on the substrate, these can be detected by backscattered light, because the backscattered light looks different than if only the backscattered light from the capture probe on the substrate is examined.

Advantageously, the pumping effect of the preferred pumping system can form both a connection between the capture probe and the analytic. Furthermore, the capture probe-analyte complexes can advantageously also be at least partially decomposable. For example, a connection between the capture probe and the analyte can be separated in a targeted manner by a targeted increase in pressure. Advantageously, the time in which capture probe-analyte complexes are present can thus be regulated.

Another advantage is that the amount of capture probe-analyte complexes to be formed can be optimised by the corresponding pressure reduction within the scope of a pressure variation. With a high pressure reduction, a high proportion of analyte can flow through the pores, so that capture probe-analyte complexes can form on the substrate. The amount of capture probe-analyte complexes can be reduced if a lower proportion of analyte is flowable through the samples, which can be achieved by adjusting the pressure reduction.

In preferred embodiments, the capture probe may be located on the film. Preferably, the capture probe may be located on the film if the film has pores. The capture probe may also preferably be arranged on the film if the film does not have pores. Hence, in a further preferred embodiment the pumping system is characterized in that capture probes are present on the film, so that on the film capture probe-analyte complexes are formable by the pressure variation. Thus, advantageously, detection from the analyte can also be enabled when capture probe is provided on the film, for example also by backscattering of light.

A capture probe preferably denotes a means by which it is possible to establish a connection between the capture and the analyte. In particular, the capture probe is characterized by its ability to capture the analyte. For example, the capture probe can be an antibody. Thus, antibodies as capture probe allow antigens (as analyte or component of the analyte) to form a link with the capture probe. A capture probe-analyte complex comprises the capture probe and the analyte, wherein they are linked to each other. The bond between a capture probe-analyte complex may, for example, be a covalent bond.

In a further preferred embodiment, the pumping system is characterized in that the heat source is a laser for an emission of electromagnetic beams, preferably the electromagnetic beams having wavelengths between 200 nm - 1000 nm, preferably between 300 nm - 900 nm, more preferably between 400 nm - 800 nm, most preferably between 500 nm - 700 nm.

A laser as a heat source has proven to be particularly advantageous for generating heat in the film and thus changing the volume of the thermoresponsive polymer to achieve the pumping effect through pressure variations. With the aid of a laser, electromagnetic radiation can advantageously be transferred to the film with particular precision for heating, as laser radiation enables precise focussing of the heat transfer. Furthermore, a laser enables an essentially maintenance-free pumping action, so that the reliability and long-term functionality of the preferred pumping system is advantageously established. Furthermore, a laser is easy to use, so that the effort required to achieve the pumping effect is reduced. Especially the manageability of a laser has an advantageous effect for the context according to the invention, since the wavelength and/or the intensity of the electromagnetic radiation can be regulated particularly easily.

Preferably, heat is generated by the laser by changing the intensity of the electromagnetic beams and/or by switching the laser on and off. The switching on and off can preferably be done alternately so that the thermoresponsive polymer experiences temperatures above and below the VPTT. The time between switching the laser on and off may preferably be in the millisecond range, for example between 1 - 1000 ms, preferably between 50 - 600 ms, more preferably between 100 - 500 ms, most preferably between 200 - 400 ms.

The aforementioned wavelength ranges of electromagnetic beams, which preferably emanate from the laser, have been found to be particularly useful in enabling effective heat transfer. Intermediate ranges from the aforementioned ranges may also be preferred for the wavelength of the electromagnetic radiation, such as 200 nm - 300 nm, 300 nm - 400 nm, 400 nm - 500 nm, 500 nm - 600 nm, 600 nm - 700 nm, 700 nm - 800 nm, 800 nm - 900 nm, or even 900 nm - 1000 nm. A skilled person will recognise that the aforementioned range limits may also be combined to obtain further preferred range, such as 200 nm - 900 nm, 400 nm - 700 nm or also 500 nm - 600 nm.

In further preferred ones, another source can also be used as a heat source (stimulation source) to raise the film and thus also the surrounding medium and the thermoresponsive polymer to a temperature as well as to lower it to achieve a pressure variation and thus a pumping effect.

In a further preferred embodiment, the pumping system is characterized in that the substrate comprises a material selected from a group comprising monosilicon, polysilicon, silicon dioxide, silicon carbide, silicon germanium, silicon nitride, nitride, germanium, carbon, wherein carbon is preferably present as graphene, gallium arsenide, gallium nitride, indium phosphide and/or glass, wherein preferably the substrate is at least one region of a flow cell and/or an optical fibre.

The materials mentioned are advantageously particularly easy and inexpensive to process and are also well suited for mass application. These materials are also particularly suitable for further processing (e.g., by means of a coating in the context of functionalisation) in order to achieve desired properties in certain areas of the substrate, such as e.g., a certain flow behaviour of the medium and/or a desired connection with a capture probe. Furthermore, the aforementioned materials offer various advantages due to the usability of standardised manufacturing techniques, which are particularly suitable for the integration of the substrate in the context of the preferred pumping system.

In a preferred embodiment, the substrate is at least one region of a flow cell and/or an optical fibre. Advantageously, a flow cell and/or an optical fibre are ideally suited to use the preferred pumping in or as a sensor to detect and/or probe the analyte.

Flow cells are preferably meant to be sample cells designed so that the medium comprising the analyte can be continuously flowed through a desired path. This is useful for samples that can be damaged by the heat source.

An optical fibre is preferably a fibre with which light signals can be sent with very little loss of strength. An optical fibre can comprise silica and/or a polymer (so-called polymer optical fibres). Advantageously, with an optical fibre the preferred pumping system do not need expensive optical equipment and allow a compact miniaturized system and remote pumping and/or sensing capability. Several applications in environmental, industrial, biological and medical fields are executable with (at least one region of) an optical fibre as the substrate, preferably a tip of the optical fibre. For example, an optical fibre can be coated with antibodies, aptamers and/or synthetic bio-mimetic polymers. To use polymer optical fibres as the substrate is particularly preferred due to advantageous properties such as simple handling, excellent flexibility, robust and compact construction, low cost, high numerical aperture, large diameter and the ability to withstand smaller bending radii than for example glass.

In a further preferred embodiment the pumping system is characterized in that the thermoresponsive polymer is selected from a group comprising poly-(N-alkyl acrylamide), poly-(N-vinyl caprolactam), poly (N-ethyl oxazolone), poly-(methyl vinyl ether), poly-(acrylic acid-co-acrylamide), elastin-like oligo- and/or polypeptides and/or further copolymers.

The aforementioned thermoresponsive polymer materials have proven to be particularly suitable for integration into the preferred pumping system. In particular, they have shown particularly useful behaviour in terms of volume reduction and volume increase in order to achieve pressure variations comprising a pressure reduction and a pressure increase in the medium and thus to effect a pumping effect. Furthermore, the said materials are advantageously available at low cost, so that the preferred pumping system can be provided in a cost-effective manner and economic efficiency is provided.

In a further preferred embodiment the pumping system is characterized in that the film comprises a material selected from a group separately or in combination comprising gold, silver, copper, Lead, Ruthenium, Rhodium, Platinum, Aluminium, Magnesium, Indium, Nickel, Gallium, Cobalt, Iron, metal nitride, preferably selected from a group comprising Titan nitride TiN, Gallium nitride GaN, Zirconium nitride ZrN, metal chalcogenide Copper sulfides (Cu₂₋ₓS_{y}), Copper selenide (Cu₂₋ₓSe _{y}), Copper-Tellurium (Cu₂₋ₓTe _{y}), carbon, wherein carbon is preferably present as graphene, Molybdenum disulfide MoS₂, metal oxides Tungsten trioxide WO₃, Indium tin oxide (ITO), Zinc Oxide (ZnO).

The aforementioned materials have proven to be particularly reliable for use as a film in the preferred pumping system. In particular, the preferred materials for the film have suitable thermal conductivity values to ensure sufficient heat transfer to the medium, especially to the thermoresponsive polymer, so that the thermoresponsive polymer can reach temperatures above and below the VPTT.

The notation for a material system AₓB_{y} describes the proportions x and y of elements and/or compounds A and B of a compound. The index x and/or y can run from 0 to 1 or assume a value between 0 and 1. Also intermediate values such as 0 to 0.9, 0.8, 0.7, 0.6, 0.5, 0.4, 0.3, 0.2 or even 0.1 may be preferred. Similarly, it may be preferred to run x and/or y between 0.1, 0.2, 0.3, 0.4, 0.5, 0.6, 0.7, 0.8 or 0.9 to 1.0. Any combination, for example 0.2 to 0.5 or even 0.1 to 0.3, is also conceivable. Preferably, the indices x and y should be selected so that they add up to 1.

In a further preferred embodiment, the pumping system is characterized in that the film has a thickness between 0.001 nm - 1000 nm, preferably between 1 nm - 500 nm, more preferably between 10 nm - 100 nm, most preferably between 40 - 80 nm.

The aforementioned thickness values proved to be particularly advantageous in two aspects. On the one hand, they ensured reliable heat transfer in the context of the invention to use the abrupt volume change of the thermoresponsive polymer to allow a pressure variation to take place. On the other hand, the aforementioned thicknesses of the film are advantageous in that they can be provided easily, quickly and thus in a process-efficient manner to allow the preferred pumping system to be carried out. Furthermore, the thicknesses have proven to be advantageous in order to reliably use a plasmonic, thermoplasmonic and/or photothermal effect.

Intermediate ranges from the aforementioned ranges with respect to the thickness of the film may also be preferred, such as for example 0.001 nm - 100 nm, 100 - 200 nm, 200 nm - 300 nm, 300 nm - 400 nm, 400 nm - 500 nm, 500 nm - 600 nm, 600 nm - 700 nm, 700 nm - 800 nm, 800 nm - 900 nm or even 900 nm - 1000 nm. A skilled person will recognise that the aforementioned range limits can also be combined to obtain other preferred ranges, such as 1 nm - 100 nm, 200 nm - 700 nm or even 5 nm - 10 nm.

In another preferred aspect, the invention relates to a sensor detecting an analyte comprising a pump system according to one or more of the previous claims.

Advantageously, the preferred pumping system may also be integrated into a sensor to detect and/or investigate an analyte. Also advantageously, the preferred pumping system itself may be used as a sensor to detect and/or investigate an analyte.

The average person skilled in the art will recognise that technical features, definitions and advantages of preferred embodiments listed for a preferred pumping system apply equally to a preferred sensor, and vice versa.

In a further preferred embodiment the sensor is characterized in that the sensor comprises a recording component, wherein the analyte is transportable by the pumping system to a detection zone and a shift in spectral properties of plasmons is detectable by the recording component.

By a sensor is preferably meant a plasmonic sensor, i.e., a sensor that uses the shift in spectral properties of plasmons to act as a transducer for a measurement signal to detect and/or examine an analyte.

The detection zone preferably means a spatial area in which the analyte can be conveyed, in particular by the preferred pumping system, in order to be able to carry out a detection and/or analysis of the analyte.

By the recording component is preferably meant a component that is able to perform spectral measurements, in particular to detect spectral shifts. The recording component can be a camera, for example a digital camera, CCD (charge-coupled device) sensor and/or a spectroscope.

The shift in spectral properties preferably comprises one or more changes in the spectrum after an event, for example by a surface plasmon resonance. Optical properties may be described, for example, by reflection, transparency and/or absorption. Likewise, the shift in spectral properties concerns a change in parameters that can be determined by a reflectance, transparency and/or absorption. For example, the analyte is transportable to the detection zone and a wavelength- and/or angle-dependent detection of the intensity of the reflected light can take place in order to determine the shift of the spectrum by the analyte.

In another preferred embodiment the sensor is characterized in that the sensor comprises an illumination source and a light guiding element and recording component, wherein the analyte is transportable by the pumping system and a shift in spectral properties of plasmons is detectable by the recording component, wherein preferably the film has a pore structure comprising pores.

The preferred embodiment advantageously provides a particularly reliable sensor. In particular, this illustrates that the preferred pumping system itself can also be used as a sensor, especially in that embodiment in which the film has pores.

If the film has pores, electromagnetic waves can be transmitted from the heat source, e.g., a laser. The phenomenon of extra-optical transmission (EOT) can be used if light is emitted with a wavelength that is larger than the diameter of the pores or the pores have a smaller diameter than the wavelength of the electromagnetic beams. Preferably, the pores are then regularly arranged, for example by a periodic arrangement of the pores. At certain wavelengths, the sensor transmits incident light much more strongly than would be expected from classical aperture theory. This extraordinary optical transmission (EOT) is a resonance phenomenon and occurs because the light excites surface plasmons. The resonance wavelength depends on the dielectric constant of the medium surrounding the sensor. For example, if an analyte binds to a caputure probe, the refractive index of the medium increases and the resonance shifts to longer wavelengths. The red shift is therefore a direct indication of the analyte. In a way, the film can thus be used preferentially to provide a sensor. The preferred sensor is advantageously scalable and can be made applicable to different analytes with appropriate capture probe.

In order to measure a change in spectral properties, an illumination source is preferably used. The illumination source is preferably a light source that has a broad wavelength spectrum available. Preferably, an illumination source is a light source that can emit white light. To the average person skilled in the art, the term white light is not obscure, as they know that white light comprises different colours. Preferably, white light comprises the spectral colours red, orange, yellow, green, blue and violet. Colour separation or dispersion can be achieved with the aid of the light guiding element. A light guiding element comprises an arrangement of optical components with the help of which it is possible to decompose the beam path and/or the spectrum. The light guiding element may comprise one or more mirrors, gratings, slits, lenses and/or prisms.

The average person skilled in the art will recognise that technical features, definitions, advantages and preferred embodiments applicable to the preferred pumping system and/or sensor are equally applicable to a preferred process, and vice versa.

Advantageously, heat is transferable through the heat source, in particular to the film, which is preferably disposed on the thermoresponsive polymer. By the heat source, heat is generated in the film, which is noticeable by an increase in temperature. The generated heat also causes the surrounding medium to become transmissible and thus also to the thermoresponsive polymer in particular.

In particular, the temperature change affects the thermoresponsive polymer in terms of its size or volume. If the thermoresponsive polymer experiences a temperature that is higher than that of the VPTT, an abrupt reduction in volume occurs. This in turn leads to a pressure reduction in the medium, so that the analyte can flow in the direction of the film. The high temperature of the film can be caused, for example, by a switched-on laser. If the temperature decreases again, for example by switching off the laser as a heat source, the thermoresponsive polymer has a temperature that is lower than the VPTT, so that there is again an increase in volume and thus also an increase in pressure in the medium, so that the analyte can flow in a certain direction. Through a sequence of these steps (e.g., an alternating sequence of switched-on and switched-off laser as heat source), a permanent pumping effect can be achieved.

The aspects according to the invention will be explained in more detail below by means of examples, without being limited to these examples.

### FIGURES

### Brief description of the figures

- **Fig. 1**: Preferred embodiment of a pumping system wherein a thermoresponsive polymer is present as particles
- **Fig. 2**: Preferred embodiment of a pumping system wherein a thermoresponsive polymer is present as particles with different output sizes in form of a gradient
- **Fig. 3**: Preferred embodiment of a pumping system wherein different amounts of heat can be transferred to the film in the form of a temperature gradient
- **Fig. 4**: Another preferred embodiment of pumping system with particles having a gradient with respect to their VPTT
- **Fig. 5**: Further embodiment of a preferred pumping system wherein a capture probe is present on a substrate and a film has a pore structure
- **Fig. 6**: Schematic representation of an arrangement for heat measurement
- **Fig. 7**: Illustration of a preferred embodiment of a sensor and of measurement results
- **Fig. 8**: Presentation of measurement results for testing a pumping system and/or sensor
- **Fig. 9**: Schematic representation of a preferred embodiment of a sensor
- **Fig. 10**: Schematic representation of an arrangement that acts as a pumping system and sensor at the same time
- **Fig. 11**: Schematic representations of embodiments of a thermoresponsive polymer as a layer
- **Fig. 12**: Schematic representation of a preferred embodiment of a sensor

### Detailed description of the figures

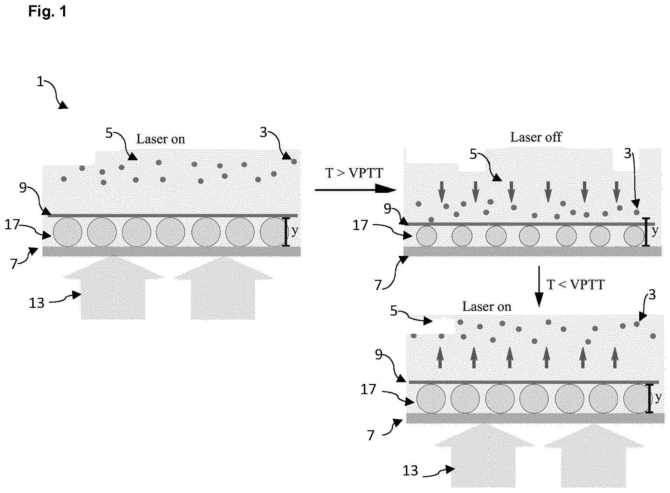

**Fig. 1** shows a preferred embodiment of a pumping system **1.**

The pumping system **1** comprises a substrate **7** which is present in a medium **5.** The medium **5** contains an analyte **3** which is to be conveyed in a pumping direction. Furthermore, a thermoresponsive polymer is present on the substrate **7,** wherein the thermoresponsive polymer is present in the form of particles **17.** Furthermore, a film **9** is arranged on the thermoresponsive polymer in the form of particles **17.**

Starting from a laser acting as a heat source (the laser is not shown in this figure), electromagnetic beams **13** are emittable. Heat can be emitted onto the film by the laser or the electromagnetic beams **13,** whereby both the surrounding medium **5** and in particular also the particles **17** can be heated. The initial size of the particles **17** is represented by y in **Fig. 1****.** The heat transfer to the film **9** is illustrated by the expression "laser on" in the top left of **Fig. 1****.**

Above a certain temperature, which is greater than the volume phase transition temperature (VPTT), an abrupt reduction in the initial size of the particles **17** occurs, in particular a reduction in the volume of the particles **17** (represented by T > VPTT). The reduction in the initial size of the particles **17** can also be seen in the top right of **Fig. 1** by looking at the expression y for the particles. The reduction in the initial size of the particles **17** results in a reduction in pressure in the medium **5,** whereby the analyte **3** can be conveyed towards the film **9** as a result of the reduction in pressure in the medium **5.** This should also be made clear by the arrows in the illustration that particles of the analyte **3** can be conveyed in the direction of the film **9.**

Furthermore, the expression "laser off" is shown on the right in **Fig. 1****,** which is intended to indicate that no electromagnetic radiation and thus no heat can now be transmitted to the film. As a result, the film **9** is cooled by the surrounding medium **5** and the particles **17** reach a temperature below the VPTT (represented by T < VPTT). This leads to an increase in volume of the particles **17** and thus also to an increase in pressure in the medium **5,** as a result of which the analyte **3** or particles of the analyte **3** move away from the film **9.** The movement of the analyte **3** away from the film is also shown by the arrows in **Fig. 1** below. By emitting electromagnetic beams **13,** the film **9** can be heated. Consequently, heat transfer to the film **9** and thus to the particles **17** of the thermoresponsive polymer is possible, so that a pressure variation in the medium 5 and thus a pumping effect can be generated by a temperature sequence above and below the VPTT. In particular, this can be achieved by an alternating sequence of switched-on and switched-off laser.

Advantageously, in the presence of particles **17** of the thermoresponsive polymer, the generated pumping volume can be achieved repeatedly. Consequently, the uniformity of the pumping effect is advantageously favoured. Furthermore, the pumping volume can be controlled particularly precisely, so that fluctuations of the pumping volume during a pumping cycle are advantageously substantially avoidable. In addition, a uniform and/or parallel movement of the film **9** and thus also of the analyte **3** is advantageously possible. Furthermore, it is advantageous that the particles **17** of the thermoresponsive polymer are particularly easy to provide, so that advantageously a considerable process efficiency can be achieved during the production of the preferred pumping system **1.**

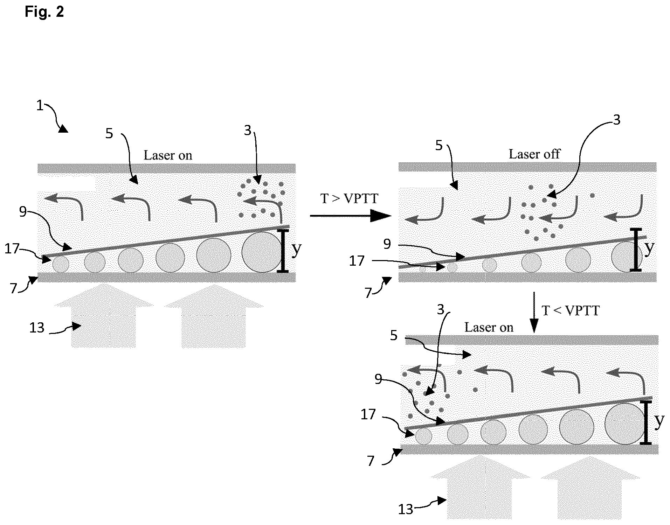

**Fig. 2** shows a preferred embodiment of a pumping system **1** with particles **17** for the thermoresponsive polymer, wherein the particles **17** have different initial sizes. The different output sizes of the particles **17** are in the form of a gradient.

The attachment of the thermoresponsive polymer in the form of particles **17** with different initial sizes as a gradient has proven to be advantageous in that the direction in which the analyte can be conveyed can be adjusted particularly easily by the volume reduction and volume increase of the particles **17** at temperatures above and below the VPTT. This allows the analyte **3** to move in a desired direction.

The gradient with respect to the initial size of the particles **17** is shown by the fact that the particles **17** on the right have a larger initial size than the particles **17** on the left. Due to the gradient with respect to the initial sizes of the particles **17** of the thermoresponsive polymer, a gradient is present so that the analyte **3** can be conveyed in the direction of the gradient.

If the particles **17** are present as a gradient with respect to their output sizes, starting from the heat source, in this case a laser by the transmission of electromagnetic beams **13,** heat can be transferred to the film **9,** the heat of the film **9** being transferable to the particles **17.** When the particles **17** reach a temperature that is above the VPTT, there is a reduction in their initial size, with all particles reducing their initial sizes (see **Fig. 2****,** top right). Since the particles **17** have different initial sizes, there are also different reductions in pressure. If the particles **17** reach a temperature above the VPTT, the size of the particles **17** increases again - this also leads to an increase in pressure in the medium **5.** In particular, a desired pumping direction can be achieved by an alternating sequence (laser on, laser off) of repeated pressure increases and pressure decreases in the medium **5.** Consequently, the direction in which the analyte 3 can be conveyed can be optimised in a particularly reliable and efficient manner.

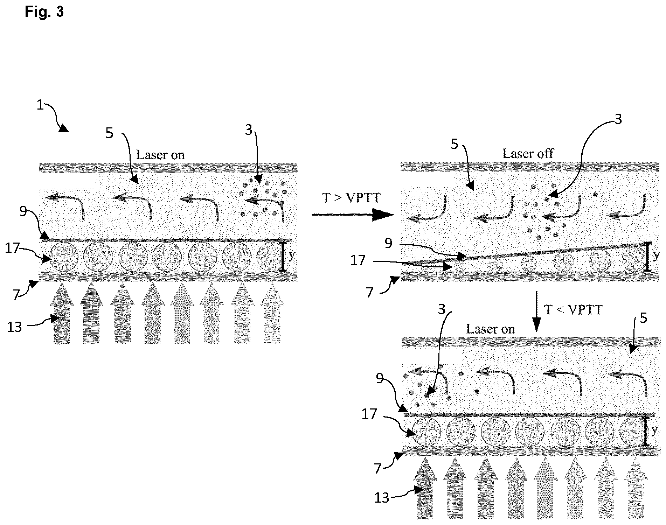

**Fig. 3** shows another embodiment of the pumping system **1.** Here, the heat is transferred to the film **9** in such a way that there is a temperature gradient on the film **9.**

Here, the thermoresponsive polymer is attached as particles **17,** whereby the particles **17** have the same initial size. The desired pumping direction can preferably be achieved by transferring different heat in form of a gradient to the film **9,** so that a different temperature is present at different sections of the film **9.** The transfer of the different amounts of heat can be achieved, for example, by the intensity of the electromagnetic beams **13,** as is symbolised in **Fig. 3** by the brightness of the arrows. This different amount of heat on the film **9** is accordingly transferable to the thermoresponsive polymer, so that consequently the thermoresponsive polymer also has different temperatures at different areas. Consequently, due to the different temperatures of the thermoresponsive polymer at different sections, a different volume reduction and volume increase can be achieved at a temperature above and below the VPTT. As a result, different pressure reductions and pressure increases are also achieved at different sections, so that the pumping direction can be optimally controlled. The pumping effect is analogous to **Fig. 2** and the basic principle is the same as in **Fig. 1****,** but the particles **17** are not present as a gradient with regard to their initial size, but the heat transfer takes place as a gradient with regard to the temperature.

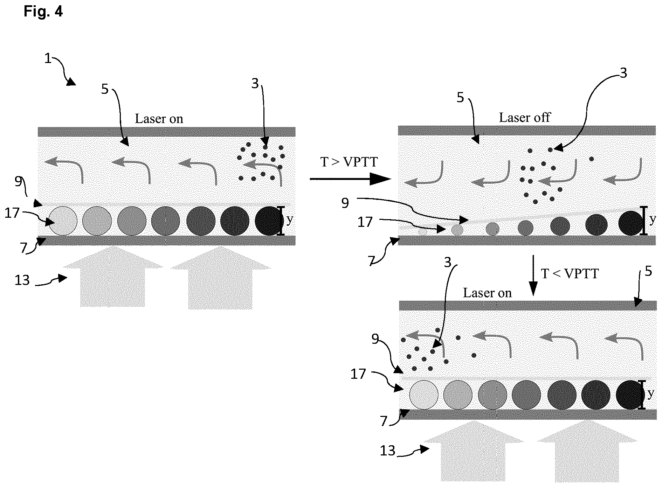

**Fig. 4** shows another embodiment of the pumping system **1.**

Herein, the thermoresponsive polymer is present as particles **17** on the substrate **7,** wherein the particles **17** are arranged having a gradient with respect to their volume phase temperature. Advantageously, this also makes it possible to adjust the direction in which the analyte **3** is to be transported. It is clear that the particles **17** that have a lower VPTT undergo a faster or greater change in volume due to the heat transfer from the heat source than the particles that have a higher VPTT. Fig. 4 shows that the particles **17** that are positioned more to the right have a higher VPTT than the particles **3** that are positioned more to the left on the substrate **7.** By uniform heat transfer through the electromagnetic beams **13,** the gradient with respect to VPTT is used to optimise the direction of the flowing analyte **3** by the differential volume reduction of the particles **17.**

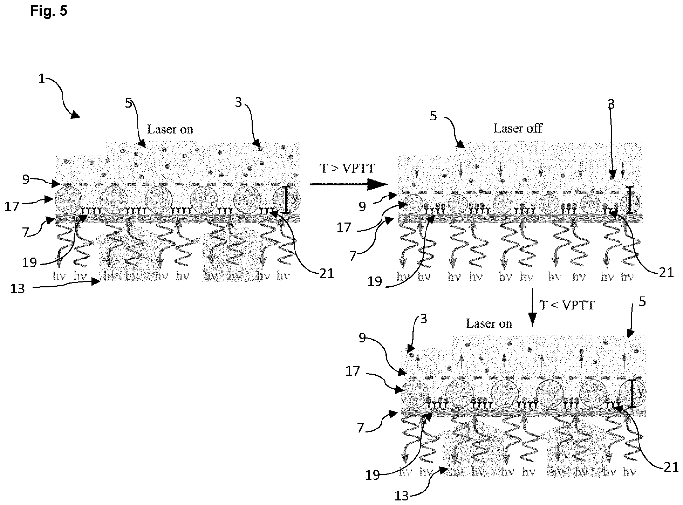

**Fig. 5** shows another embodiment of a pumping system **1** in which a capture probe **19** is present on the substrate **7.** Furthermore, the film **9** has a pore structure, i.e., the film **9** is provided with pores.

This embodiment is particularly suitable to enable detection of e.g., antigens that can form the analyte **3,** whereby the capture probe **19** would then be antibodies. Due to the pore structure on the film **9,** the analyte can flow through the pores as a result of the pressure variation.

Heat can be transferred to the film **9,** so that if the temperature of the particles **17** is above the VPTT, there is a reduction in the volume of the particles **17** and thus a reduction in pressure in the medium **5.** Due to the pressure reduction in the medium **5,** the analyte can flow in the direction of the film **9** and in particular through the pores of the film. When contact is made with the capture probe **19,** capture probe-analyte complexes **21** then form on the substrate **7.** By switching the laser on and off, a pressure variation can be effected and a pumping behaviour can be generated in order to convey a quantity of analyte **3** to the capture probe **19.**

This embodiment is particularly advantageous for examining analytes **3** in solutions, where the solvent is the medium **5.** For example, the scattering effect of light (indicated by curved arrows and the expression hv as an expression for the energy of the light) can be used to investigate the analyte **3.** If there is a connection between the caputure probe **19** and the analyte **3** and thus capture probe-analyte complex **32,** these can be detected by backscattered light, since the backscattered light looks different than if only the backscattered light from the capture probe **19** on the substrate **7** is examined.

By adjusting the pressure variation, for example by regulating the amount of heat to be transferred, the amount of capture probe-analyte complex **21** to be formed can be optimised. With a high reduction in pressure, a correspondingly high proportion of analyte **3** can flow through the pores, so that more capture probe-analyte complexes **21** can form on the substrate **7.** The amount of capture probe-analyte complexes **21** can be reduced if a lower proportion of analyte **3** can flow through the pores, which can be achieved by reducing the pressure reduction.

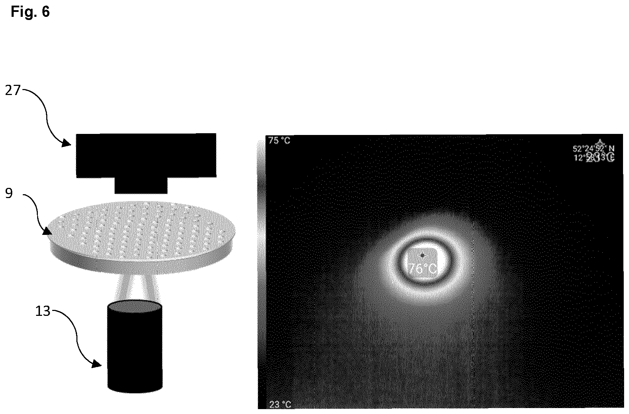

**Fig. 6** schematically shows an arrangement with which the heat generated in the film **9** can be measured. The arrangement can be seen as part of a sensor and/or a pumping system.

On the left of the arrangement the film **9** can be seen, which has a pore structure. In particular, the film **9** may be a gold film with a pore structure. The laser **9** serves to generate heat in the film **9,** e.g., by a photothermal and/or thermoplasmonic effect. The heat generation in the film is proportional to the wavelength and power densitiy of the laser **9.**

With a recording component **27,** which in this case is a thermal imaging camera, the generated heat can be measured. With an appropriate laser intensity, a temperature of approx. 76°C can be reached, which is shown on the right in the thermal image.

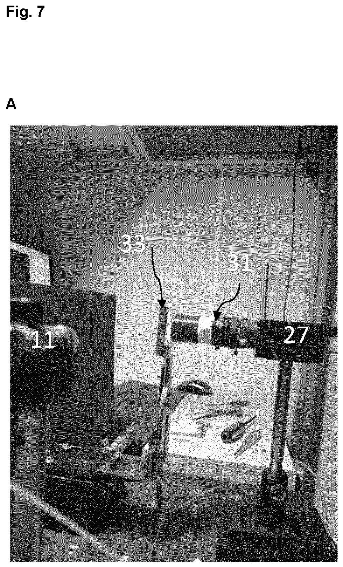

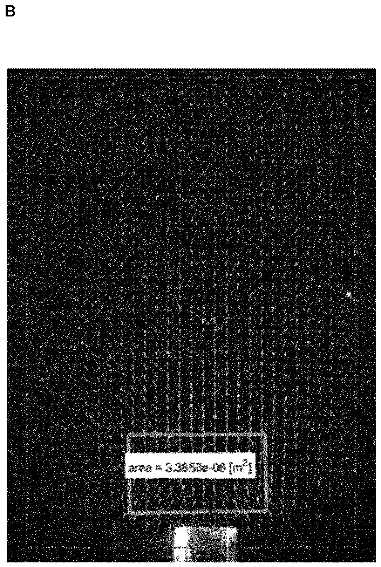

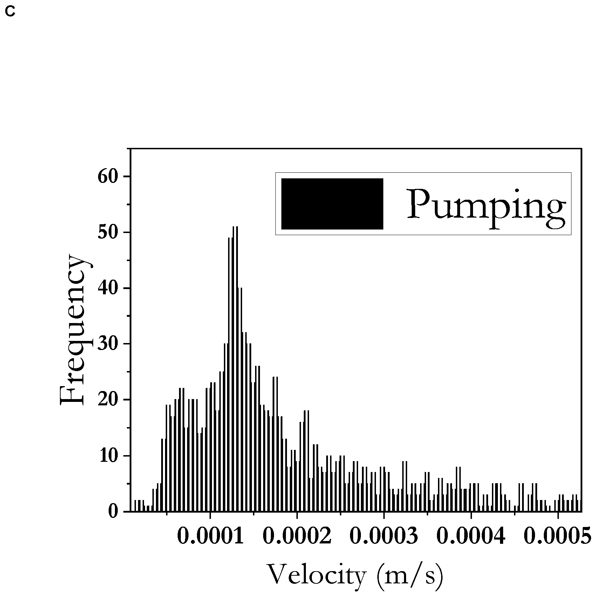

**Fig. 7** shows an arrangement of components, which can provide a sensor. Also, measurement results are presented regarding the achievable speed using a pumping system.

**Fig. 7** **A** shows an arrangement of components. The pumping system is located in a cuvette **33.** Furthermore, there is a light guiding element **31,** which is to be understood as an arrangement of lenses. The recording component **31** is in this arrangement a CCD camera. The recording component **27** is back of the light guiding element. Furthermore, a laser **11** is also shown to provide a heat source.

**Fig. 7** **B** shows a measurement result obtained by Particle Image Velocimetry (PIV, non-contact optical method for determining velocity fields in fluid mechanics). Particles in the medium are photographed at short time intervals so that the direction and/or velocity of movement can be approximately averaged from the particle positions on the images.

In **Fig. 7** **C** the frequency of the pumping process is plotted against the amount of the mean velocity a. It can be seen that velocities of up to 500 µm/s can be achieved by a preferred pumping system and/or sensor.

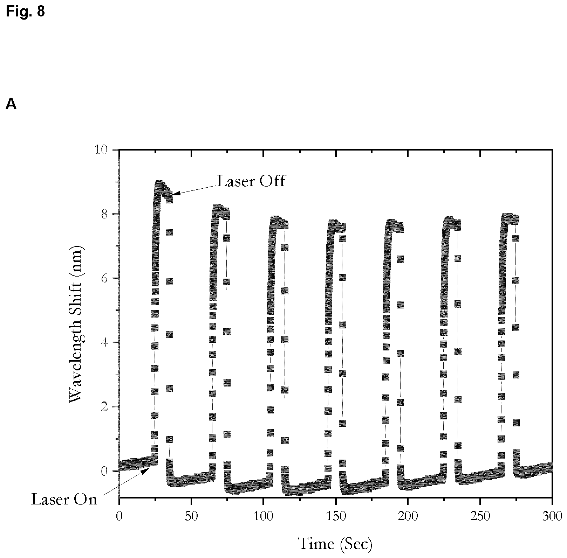

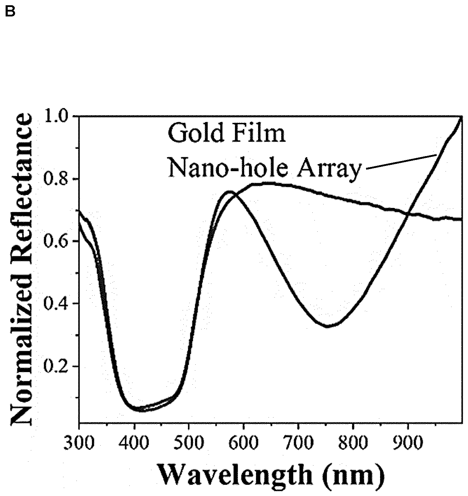

**Fig. 8** shows different measurement results.

**Fig. 8** **A** shows measurement results of the kinetic response in response to the laser pulse. The points drawn in the lower part of the curves represent times when the laser is switched on, while the points in the upper parts are meant to represent a switched off laser.

**Fig. 8** **B** shows a normalised reflectivity spectrum of a film comprising gold and a nano-hole array (film with pores). The low point of the curve at about 450 nm corresponds to the properties of gold, whereas the low point of the nano-hole array at about 750 nm indicates an EOT peak.

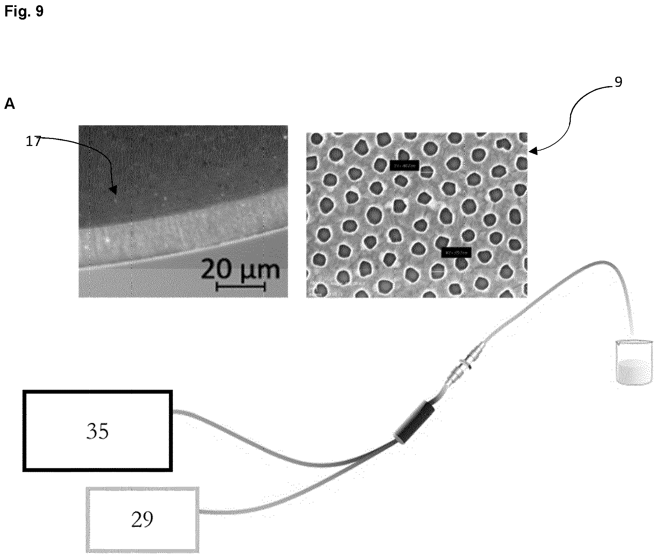

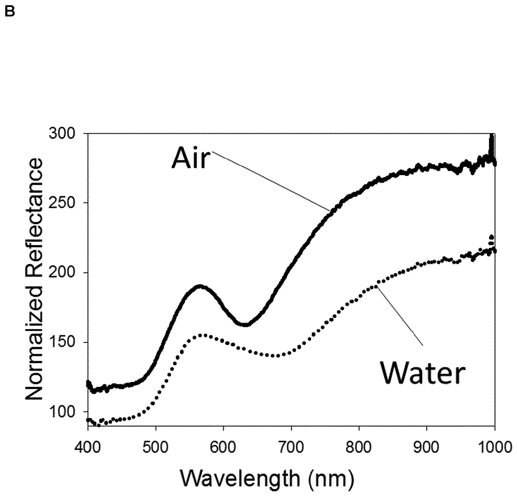

**Fig. 9** **A** schematically shows preferred components of a sensor **25.** The sensor **25** comprises an illumination source **29** as well as a spectroscope **35.** The pumping system is located in a container. Furthermore, close-up views of the pumping system are shown, wherein particles **17** as thermoresponsive polymer and the film **9** are presented.

With the aid of the spectroscope **35,** it is possible to detect a shift in the spectral characteristics in order to detect and/or investigate the analyte. The detection zone may be the area under the film where the analyte can be introduced through the pores of the film. Thus, the pumping system can act as a sensor. In this illustration, the pumping system is located on a fibre, with the film **9** comprising pores at the tip of the optical fibre, in a container. With the aid of this arrangement it is possible to measure the EOT particularly precisely.

**Fig 9** **B** shows measurement curves of normalised reflectivity in water and air. The high point in the range of approx. 600 nm corresponds to the EOT peak.

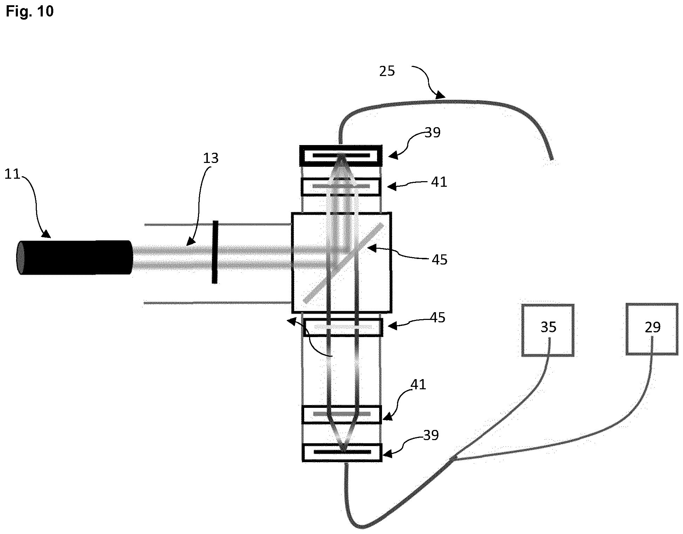

**Fig. 10** shows a schematic arrangement in which it is possible for the pumping system to act simultaneously as a sensor **25.**

The arrangement comprises, as in other embodiments of the aspects of the invention, a laser **9,** an illumination source **29** and a spectroscope **35.** Furthermore, a mechanical shutter **37** is located between the laser **9** and a longpass dichroic mirror (LDC) **45.** Furthermore, two achromatic doublet (DB) **41** as as well as two suminiature connectors (SMA) 39 are located in the arrangement, whereby one SMA **39** is located behind each AD **41.** A longpass filter (LF) **43** is located in the lower section. The pumping system is arranged at the top. Essentially, the arrangement of **Fig. 10** is an extension of the arrangement according to **Fig. 9A****.** Here it is possible to couple the laser into the pumping system or the sensor.

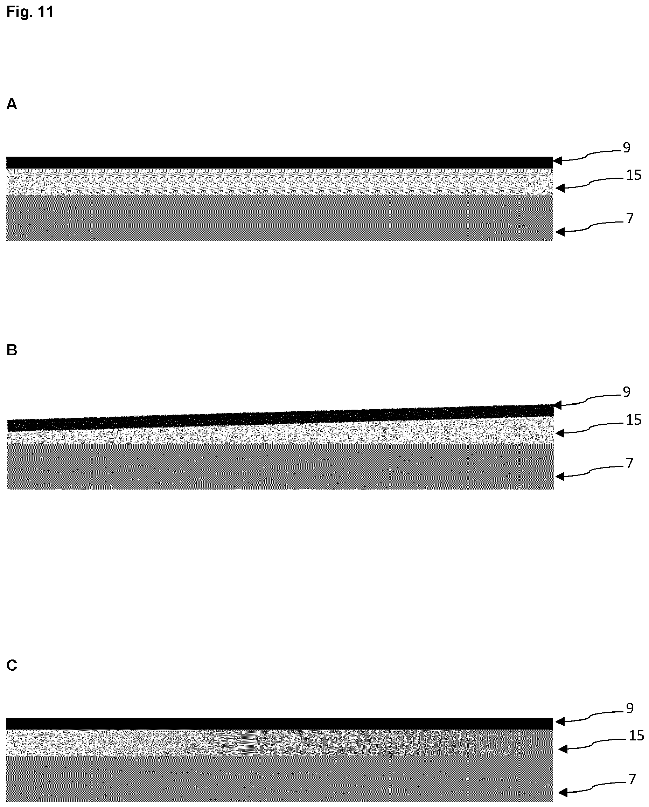

**Fig. 11** shows various embodiments of the thermoresponsive polymer as a layer **15** present between the substrate **7** and the film **9.**

In **Fig. 11** **A** a layer **15** (monolayer) is shown which is uniformly arranged. Advantageously, the embodiment of the thermoresponsive polymer results in allowing a parallel and/or uniform movement of the film **9** in case of a volume change of the thermoresponsive polymer. This results from the film being placed on the thermoresponsive polymer. Advantageously, this also enables a parallel and/or uniform movement of the film and/or the analyte. Furthermore, the design of the thermoresponsive polymer as a layer **15** is advantageous for the provision of a pumping system, since the layer **15** is particularly easy to provide. For the provision of the layer **15,** it is advantageous to use proven and reliable coating technologies of the prior art.

**Fig. 11** **B** also shows an arrangement comprising substrate **7,** layer **15** and film **9.** Here, the layer **15** has a thickness variation. This can also provide a slope so that an analyte can be pumped in a certain direction, in particular in the direction of the slope.

**In** **Fig. 11** **C,** the layer **15** in the illustration shows a variation in brightness. This is to indicate that starting from a heat source, different heat can be transferred to the film **9,** so that a temperature gradient is also untransferable to the layer **15** in order to influence the pumping direction.

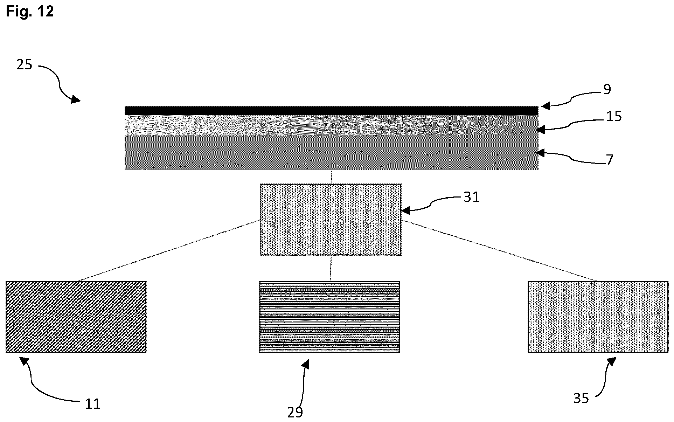

**Fig. 12** schematically shows an embodiment of a sensor **25.**

The sensor **25** comprises a laser **11** with which heat can be transferred to the film **9,** which in turn transfers heat to layer **15** as a thermoresponsive polymer. The layer **15** is arranged on a substrate **7.** Furthermore, the sensor **25** comprises an illumination source **29,** a light guiding element **31** and a spectroscope **35.**

The illumination source **29** can emit light with a wide wavelength range, e.g., white light, onto the layer **15** in order to measure a change in the spectral properties (spectral shift) with the aid of the spectroscope **35.** This may include, for example, the measurement of reflectivity and/or transmittance as a function of wavelength. This makes it possible to detect and/or analyse the analyte. With the aid of the light guiding element **31,** the light can be given a desired beam path from illumination source **29** to layer **15,** for example through an arrangement of lenses.

### REFERENCE SIGNS

- 1: pumping system
- 3: analyte
- 5: medium
- 7: substrate
- 9: film
- 11: laser
- 13: electromagnetic beams
- 15: layer
- 17: particle of thermoresponsive polymer
- 19: capture probe
- 21: capture probe-analyte-complexe
- 25: sensor
- 27: recording component
- 29: illumination source
- 31: light guiding element
- 33: cuvette
- 35: spectroscope
- 37: shutter
- 39: SMA connector (SMA SubMiniature version A)
- 41: achromatic doublet
- 43: longpass filter
- 45: longpass dichroic mirror

### BIBLIOGRAPHY

Garcia-Guirado, Jose, et al. "Overcoming diffusion-limited biosensing by electrothermoplasmonics." ACS photonics 5.9 (2018): 3673-3679.
Eftekhari, Fatemeh, et al. "Nanoholes as nanochannels: flow-through plasmonic sensing." Analytical chemistry 81.11 (2009): 4308-4311.
Giaquinto, Martino, et al. "Cavity-enhanced lab-on-fiber technology: toward advanced biosensors and nano-opto-mechanical active devices."ACS Photonics 6.12 (2019): 3271-3280.
Sharma, Nityanand, et al. "Tunable plasmonic nanohole arrays actuated by a thermoresponsive hydrogel cushion." The Journal of Physical Chemistry C 120.1 (2016): 561-568.
Bafou, Guillaume, et al. "Applications and challenges of thermoplasmonics." Nature Materials, Nature Publishing Group UK, London, Vol. 19 No. 9 (2020): 946-958.

## Claims

1. A pumping system (1) for transporting an analyte (3), the analyte (3) being present in a
medium (5), the pumping system (1) comprising a substrate (7),
**characterized in that**
a) the substrate (7) is located within the medium (5),
b) a thermoresponsive polymer (15, 17) is disposed on the substrate,
c) a film (9) is present on the thermoresponsive polymer (15, 17),
d) the pumping system (1) comprises a heat source,
wherein the heat source is configured to generate heat in the film (9), so that a sequence of temperatures above and below a volume phase transition temperature is obtainable by the thermoresponsive polymer (15, 17) and a pressure variation is obtainable by the medium (5), so that the analyte (3) is transportable in a direction by the pressure variation.

2. Pumping system (1) according to the previous claim
**characterized in that**
the thermoresponsive polymer material (15, 17) is disposed between the film (9) and the substrate (7), preferably the thermoresponsive polymer material comprises one or more layers (15) and/or the thermoresponsive polymer is present as a plurality of particles (17).

3. Pumping system (1) according to one or more of the previous claims
**characterized in that**
the thermoresponsive polymer is present as particles (17) on the substrate, wherein preferably the particles (17) having different output sizes, more preferably the different output sizes of the particles (17) being present as a gradient with respect to the output sizes.

4. Pumping system (1) according to one or more of the previous claims
**characterized in that**
the thermoresponsive polymer is present as particles (17) on the substrate, wherein the particles (17) are arranged having a gradient with respect to their volume phase temperature.

5. Pumping system (1) according to one or more of the previous claims
**characterized in that**
starting from the heat source different amounts of heat are transferrable to the film (9) in different regions, wherein preferably that the different amounts of heat are transferable to the film (9) as a temperature gradient.

6. Pumping system (1) according to one or more of the previous claims
**characterized in that**
the film (9) has a pore structure comprising pores, wherein preferably capture probes (19) are present on the substrate (7) and/or the film (9), so that the analyte (3) is flowable through the pores by the pressure variation and capture probe-analyte-complexes (21) are formable.

7. Pumping system (1) according to one or more of the previous claims
**characterized in that**
the heat source is a laser (11) for an emission of electromagnetic beams (13), preferably the electromagnetic beams having wavelengths between 200 nm - 1000 nm, preferably between 300 nm - 900 nm, more preferably between 400 nm - 800 nm, most preferably between 500 nm - 700 nm.

8. Pumping system (1) according to one or more of the previous claims
**characterized in that**
the substrate (7) comprises a material selected from a group comprising monosilicon, polysilicon, silicon dioxide, silicon carbide, silicon germanium, silicon nitride, nitride, germanium, carbon, wherein carbon is preferably present as graphene, gallium arsenide, gallium nitride, indium phosphide and/or glass, wherein preferably the substrate is at least one region of a flow cell and/or an optical fibre.

9. Pumping system (1) according to one or more of the preceding claims
**characterized in that**
the thermoresponsive polymer (15, 17) is selected from a group comprising poly-(N-alkyl acrylamide), poly-(N-vinyl caprolactam), poly (N-ethyl oxazolone), poly-(methyl vinyl ether), poly-(acrylic acid-co-acrylamide), elastin-like oligo- and/or polypeptides and/or further copolymers.

10. Pumping system (1) according to one or more of the preceding claims
**characterized in that**
the film (9) comprises a material selected from a group separately or in combination comprising gold, silver, copper, Lead, Ruthenium, Rhodium, Platinum, Aluminium, Magnesium, Indium, Nickel, Gallium, Cobalt, Iron, metal nitride, preferably selected from a group comprising Titan nitride TiN, Gallium nitride GaN, Zirconium nitride ZrN, metal chalcogenide Copper sulfides (Cu₂₋ₓS_{y}), Copper selenide (Cu₂₋ₓSe _{y}), Copper-Tellurium (Cu₂₋ₓTe _{y}), carbon, wherein carbon is preferably present as graphene, Molybdenum disulfide MoS₂, metal oxides Tungsten trioxide WO₃, Indium tin oxide ITO, Zinc Oxide (ZnO).

11. Pumping system (1) according to one or more of the preceding claims
**characterized in that**
the film (9) has a thickness between 0.001 nm - 1000 nm, preferably between 1 nm - 500 nm, more preferably between 10 nm - 100 nm, most preferably between 40 - 80 nm.

12. A sensor (25) for detecting an analyte comprising a pumping system according to one or more of the previous claims.

13. A sensor (25) according to the previous claim
**characterized in that**
the sensor comprises a recording component (27), wherein the analyte is transportable by the pumping system (1) to a detection zone and a shift in spectral properties of plasmons is detectable by the recording component (27).

14. Sensor (25) according to one or more of the previous claims 12 and 13
**characterized in that**
the sensor (25) comprises an illumination source (29) and a light guiding element (31) and recording component (27), wherein the analyte (3) is transportable by the pumping system (1) and a shift in spectral properties of plasmons is detectable by the recording component (27), wherein preferably the film (9) has a pore structure comprising pores.

15. A method of transporting an analyte (3) using a pumping system (1) according to one or more of claims 1-10, wherein the pumping system (1) comprises a substrate (7) located within a medium (5), a thermoresponsive polymer (15, 17) is disposed on the substrate, a film (9) is present on the thermoresponsive polymer (15, 17), and the pumping system (1) comprises a heat source, comprising the steps of
a) generating heat in the film (9) by the heat source,
b) obtaining a sequence of temperatures above and below a volume phase transition temperature of the thermoresponsive polymer (15, 17) and a pressure variation of the medium (5), such that the pressure variation causes the analyte (3) to be transported in a direction.

## Patentansprüche

1. Pumpsystem (1) zum Transport eines Analyten (3), wobei der Analyt (3) in einem Medium (5) vorliegt, wobei das Pumpensystem (1) ein Substrat (7) umfasst,
**dadurch gekennzeichnet, dass:**
a) sich das Substrat (7) innerhalb des Mediums (5) befindet,
b) ein thermoresponsives Polymer (15, 17) auf dem Substrat (7) angeordnet ist,
c) ein Film (9) auf dem thermoresponsiven Polymer (15, 17) vorhanden ist,
d) das Pumpsystem (1) eine Wärmequelle umfasst,
wobei die Wärmequelle so konfiguriert ist, dass sie Wärme in den Film (9) einleitet, sodass eine Abfolge von Temperaturen oberhalb und unterhalb einer Volumenphasenübergangstemperatur durch das thermoresponsive Polymer (15, 17) erzielbar ist und eine Druckänderung im Medium (5) erzielbar ist, wodurch der Analyt (3) durch die Druckänderung in eine Richtung transportiert werden kann.

2. Pumpsystem (1) nach dem vorhergehenden Anspruch.
**dadurch gekennzeichnet, dass:**
wobei das thermoresponsive Polymermaterial (15, 17) zwischen dem Film (9) und dem Substrat (7) angeordnet ist, vorzugsweise umfasst das thermoresponsive Polymermaterial eine oder mehrere Schichten (15) und/oder liegt als Vielzahl von Partikeln (17) vor.

3. Pumpsystem (1) nach einem oder mehreren der vorhergehenden Ansprüche,
**dadurch gekennzeichnet, dass:**
das thermoresponsive Polymer als Partikel (17) auf dem Substrat vorhanden ist, wobei vorzugsweise die Partikel (17) unterschiedliche Ausgangsgrößen aufweisen, noch bevorzugter die verschiedenen Ausgangsgrößen der Partikel (17) als ein Gradient bezüglich der Ausgangsgrößen vorhanden sind.

4. Pumpsystem (1) nach einem oder mehreren der vorhergehenden Ansprüche,
**dadurch gekennzeichnet, dass:**
das thermoresponsive Polymer als Partikel (17) auf dem Substrat vorhanden ist, wobei die Partikel (17) so angeordnet sind, dass sie einen Gradienten bezüglich ihrer Volumenphasentemperatur aufweisen.

5. Pumpsystem (1) nach einem oder mehreren der vorhergehenden Ansprüche,
**dadurch gekennzeichnet, dass:**
ausgehend von der Wärmequelle unterschiedliche Wärmemengen in verschiedenen Bereichen auf den Film (9) übertragen werden können, wobei vorzugsweise die unterschiedlichen Wärmemengen als Temperaturgradient auf den Film (9) übertragbar sind.

6. Pumpsystem (1) nach einem oder mehreren der vorhergehenden Ansprüche,
**dadurch gekennzeichnet, dass:**
der Film (9) eine Porenstruktur besitzt, die Poren umfasst, wobei vorzugsweise Fangsonden (19) auf dem Substrat (7) und/oder dem Film (9) vorhanden sind, sodass das Analyt (3) durch die Druckvariation durch die Poren fließbar ist und Fangsonden-Analyt-Komplexe (21) bildbar sind.

7. Pumpsystem (1) nach einem oder mehreren der vorhergehenden Ansprüche,
**dadurch gekennzeichnet, dass:**
die Wärmequelle ein Laser (11) zur Emission elektromagnetischer Strahlen (13) ist, vorzugsweise die elektromagnetischen Strahlen Wellenlängen zwischen 200 nm und 1000 nm, bevorzugter zwischen 300 nm und 900 nm, noch bevorzugter zwischen 400 nm und 800 nm, am bevorzugtesten zwischen 500 nm und 700 nm aufweisen.

8. Pumpsystem (1) nach einem oder mehreren der vorhergehenden Ansprüche,
**dadurch gekennzeichnet, dass:**
das Substrat (7) aus einem Material besteht, das aus einer Gruppe ausgewählt ist, die Monosilizium, Polysilizium, Siliziumdioxid, Siliziumkarbid, Silizium-Germanium, Siliziumnitrid, Nitrid, Germanium, Kohlenstoff umfasst, wobei Kohlenstoff vorzugsweise als Graphen, Galliumarsenid, Galliumnitrid, Indiumphosphid und/oder Glas vorhanden ist, wobei vorzugsweise das Substrat mindestens ein Bereich einer Flusszelle und/oder einer optischen Faser ist.

9. Pumpsystem (1) nach einem oder mehreren der vorhergehenden Ansprüche,
**dadurch gekennzeichnet, dass:**
das thermoresponsive Polymer (15, 17) aus einer Gruppe ausgewählt wird, die Poly-(N-alkylacrylamid), Poly- (N-inylcaprolactam), Poly-(N-ethyl-oxazolon), Poly-(methylvinylether), Poly-(Acrylsäure-co-Acrylamid), elastinähnliche Oligo- und/oder Polypeptide und/oder weitere Copolymere umfasst.

10. Pumpsystem (1) nach einem oder mehreren der vorhergehenden Ansprüche,
**dadurch gekennzeichnet, dass:**
der Film (9) aus einem Material besteht, das einzeln oder in Kombination aus einer Gruppe ausgewählt wird, die Gold, Silber, Kupfer, Blei, Ruthenium, Rhodium, Platin, Aluminium, Magnesium, Indium, Nickel, Gallium, Kobalt, Eisen, Metallnitrid, vorzugsweise aus einer Gruppe ausgewählt, die Titanitrid TiN, Galliumnitrid GaN, Zirkoniumnitrid ZrN, Metallchalkogenide wie Kupfersulfide (Cu2-xSy), Kupferselenid (Cu2-xSe y), Kupfer-Tellurid (Cu2-xTe y), Kohlenstoff umfasst, wobei Kohlenstoff vorzugsweise als Graphen, Molybdändisulfid MoS2, Metalloxide wie Wolframtrioxid WO3, Indiumzinnoxid ITO, Zinkoxid (ZnO) vorhanden ist.

11. Pumpsystem (1) nach einem oder mehreren der vorhergehenden Ansprüche,
**dadurch gekennzeichnet, dass:**
der Film (9) eine Dicke zwischen 0,001 nm und 1000 nm, bevorzugt zwischen 1 nm und 500 nm, noch bevorzugter zwischen 10 nm und 100 nm, am bevorzugtesten zwischen 40 nm und 80 nm aufweist.

12. Sensor (25) zur Detektion eines Analyten, umfassend ein Pumpsystem (1) nach einem oder mehreren der vorherigen Ansprüche.

13. Sensor (25) nach dem vorherigen Anspruch,
**dadurch gekennzeichnet, dass:**
der Sensor eine Aufnahmekomponente (27) umfasst, wobei der Analyt durch das Pumpsystem (1) in eine Detektionszone transportierbar ist und eine Verschiebung der spektralen Eigenschaften von Plasmonen durch die Aufnahmekomponente (27) detektierbar ist.

14. Sensor (25) nach einem oder mehreren der vorherigen Ansprüche 2, 12 und 13.
**dadurch gekennzeichnet, dass:**
der Sensor (25) eine Beleuchtungsquelle (29), ein Lichtleitelement (31) und eine Aufnahmekomponente (27) umfasst, wobei der Analyt (3) durch das Pumpsystem (1) transportierbar ist und eine Verschiebung der spektralen Eigenschaften von Plasmonen durch die Aufnahmekomponente (27) detektierbar ist, wobei vorzugsweise der Film (9) eine Porenstruktur aufweist, die Poren umfasst.

15. Verfahren zum Transportieren eines Analyten (3) unter Verwendung eines Pumpsystems (1) nach einem oder mehreren der Ansprüche 1-10, wobei das Pumpsystem (1) ein Substrat (7) umfasst, das innerhalb eines Mediums (5) positioniert ist, ein thermoresponsives Polymer (15, 17) auf dem Substrat angeordnet ist, ein Film (9) auf dem thermoresponsiven Polymer (15, 17) vorhanden ist und das Pumpsystem (1) eine Wärmequelle umfasst, Wobei das Verfahren die folgenden Schritte folgenden umfasst:
a) Erzeugen von Wärme im Film (9) durch die Wärmequelle,
b) Erhalten einer Sequenz von Temperaturen oberhalb und unterhalb einer Volumenphasenübergangstemperatur des thermoresponsiven Polymers (15, 17) und einer Druckvariation des Mediums (5), sodass die Druckvariation den Transport des Analyten (3) in eine Richtung verursacht.

## Revendications

1. Système de pompage (1) pour transporter un analyte (3), l'analyte (3) étant présent dans un milieu (5), le système de pompage (1) comprenant un substrat (7), **caractérisé en ce que**
a) le substrat (7) est situé à l'intérieur du milieu (5),
b) un polymère thermosensible (15, 17) est disposé sur le substrat,
c) un film (9) est présent sur le polymère thermosensible (15, 17),
d) le système de pompage (1) comprend une source de chaleur,
dans lequel la source de chaleur est configurée pour générer de la chaleur dans le film (9), de sorte qu'une séquence de températures au-dessus et au-dessous d'une température de transition de phase volumique peut être obtenue par le polymère thermosensible (15, 17) et une variation de pression peut être obtenue par le milieu (5), de sorte que l'analyte (3) est transportable dans une direction par la variation de pression.

2. Système de pompage (1) selon la revendication précédente **caractérisé en ce que**
le matériau polymère thermosensible (15, 17) est disposé entre le film (9) et le substrat (7), de préférence le matériau polymère thermosensible comprend une ou plusieurs couches (15) et/ou le polymère thermosensible est présent sous la forme d'une pluralité de particules (17).

3. Système de pompage (1) selon une ou plusieurs des revendications précédentes **caractérisé en ce que**
le polymère thermosensible est présent sous forme de particules (17) sur le substrat, dans lequel les particules (17) ont de préférence des tailles de sortie différentes, plus préférablement les différentes tailles de sortie des particules (17) étant présentes sous forme de gradient par rapport aux tailles de sortie.

4. Système de pompage (1) selon une ou plusieurs des revendications précédentes **caractérisé en ce que**
le polymère thermosensible est présent sous forme de particules (17) sur le substrat, dans lequel les particules (17) sont disposées avec un gradient par rapport à leur température de phase volumique.

5. Système de pompage (1) selon une ou plusieurs des revendications précédentes **caractérisé en ce que**
à partir de la source de chaleur, différentes quantités de chaleur sont transférables au film (9) dans différentes régions, dans lequel de préférence les différentes quantités de chaleur sont transférables au film (9) sous forme de gradient de température.

6. Système de pompage (1) selon une ou plusieurs des revendications précédentes **caractérisé en ce que**
le film (9) présente une structure poreuse comprenant des pores, dans lequel des sondes de capture (19) sont de préférence présentes sur le substrat (7) et/ou le film (9), de sorte que l'analyte (3) peut s'écouler à travers les pores par la variation de pression et que des complexes sonde de capture-analyte (21) peuvent être formés.

7. Système de pompage (1) selon une ou plusieurs des revendications précédentes, **caractérisé en ce que**
la source de chaleur est un laser (11) pour une émission de faisceaux électromagnétiques (13), de préférence les faisceaux électromagnétiques ayant des longueurs d'onde comprises entre 200 nm et 1000 nm, de préférence entre 300 nm et 900 nm, plus préférablement entre 400 nm et 800 nm, le plus préférablement entre 500 nm et 700 nm.

8. Système de pompage (1) selon une ou plusieurs des revendications précédentes, **caractérisé en ce que**
le substrat (7) comprend un matériau choisi dans un groupe comprenant du monosilicium, du polysilicium, du dioxyde de silicium, du carbure de silicium, du silicium-germanium, du nitrure de silicium, du nitrure, du germanium, du carbone, dans lequel le carbone est de préférence présent sous forme de graphène, d'arséniure de gallium, de nitrure de gallium, de phosphure d'indium et/ou de verre, dans lequel le substrat est de préférence au moins une région d'une cellule d'écoulement et/ou d'une fibre optique.

9. Système de pompage (1) selon une ou plusieurs des revendications précédentes, **caractérisé en ce que**
le polymère thermosensible (15, 17) est choisi dans un groupe comprenant le poly- (N-alkylacrylamide), le poly-(N-vinylcaprolactame), le poly(N-éthyloxazolone), le poly-(méthylvinyléther), le poly-(acide acrylique-co-acrylamide), les oligo- et/ou polypeptides de type élastine et/ou d'autres copolymères.

10. Système de pompage (1) selon une ou plusieurs des revendications précédentes, **caractérisé en ce que**
le film (9) comprend un matériau choisi dans un groupe comprenant séparément ou en combinaison l'or, l'argent, le cuivre, le plomb, le ruthénium, le rhodium, le platine, l'aluminium, le magnésium, l'indium, le nickel, le gallium, le cobalt, le fer, un nitrure métallique, de préférence choisi dans un groupe comprenant le nitrure de titane TiN, le nitrure de gallium GaN, le nitrure de zirconium ZrN, un chalcogénure métallique, des sulfures de cuivre (Cu₂₋ₓS_{y}), du séléniure de cuivre (Cu₂₋ₓSe_{y}), du cuivre-tellure (Cu₂₋ₓTe_{y}), du carbone, dans lequel le carbone est de préférence présent sous forme de graphène, du disulfure de molybdène MoS₂, des oxydes métalliques, du trioxyde de tungstène WO₃, de l'oxyde d'étain et d'indium ITO, de l'oxyde de zinc (ZnO).

11. Système de pompage (1) selon une ou plusieurs des revendications précédentes, **caractérisé en ce que**
le film (9) a une épaisseur comprise entre 0,001 nm et 1000 nm, de préférence entre 1 nm et 500 nm, plus préférablement entre 10 nm et 100 nm, le plus préférablement entre 40 et 80 nm.

12. Capteur (25) pour détecter un analyte comprenant un système de pompage selon une ou plusieurs des revendications précédentes.

13. Capteur (25) selon la revendication précédente **caractérisé en ce que**
le capteur comprend un composant d'enregistrement (27), dans lequel l'analyte est transportable par le système de pompage (1) vers une zone de détection et un décalage dans les propriétés spectrales des plasmons est détectable par le composant d'enregistrement (27).

14. Capteur (25) selon une ou plusieurs des revendications précédentes 12 et 13 **caractérisé en ce que**
le capteur (25) comprend une source d'éclairage (29) et un élément de guidage de lumière (31) et un composant d'enregistrement (27), dans lequel l'analyte (3) est transportable par le système de pompage (1) et un décalage dans les propriétés spectrales des plasmons est détectable par le composant d'enregistrement (27), dans lequel de préférence le film (9) a une structure poreuses comprenant des pores.

15. Procédé de transport d'un analyte (3) utilisant un système de pompage (1) selon une ou plusieurs des revendications 1 à 10, dans lequel le système de pompage (1) comprend un substrat (7) situé dans un milieu (5), un polymère thermosensible (15, 17) est disposé sur le substrat, un film (9) est présent sur le polymère thermosensible (15, 17), et le système de pompage (1) comprend une source de chaleur, comprenant les étapes de
a) génération de chaleur dans le film (9) par la source de chaleur,
b) obtention **d'une** séquence de températures au-dessus et en dessous d'une température de transition de phase volumique du polymère thermosensible (15, 17) et une variation de pression du milieu (5), de telle sorte que la variation de pression provoque le transport de l'analyte (3) dans une direction.
